Europäisches Patentamt

(19) European Patent Office

Office européen des brevets

(11) Publication number: **0 048 405**
**A2**

(12) # EUROPEAN PATENT APPLICATION

(21) Application number: 81107129.9

(22) Date of filing: 10.09.81

(51) Int. Cl.³: **H 02 P 8/00**

(30) Priority: 18.09.80 IT 2473480

(43) Date of publication of application:
31.03.82 Bulletin 82/13

(84) Designated Contracting States:
DE FR GB

(71) Applicant: HONEYWELL INFORMATION SYSTEMS
ITALIA S.p.A.
Servizio Brevetti Honeywell
I-20010 Pregnana Milanese (MI)(IT)

(72) Inventor: Cattoni, Roberto
V.le P.O. Vigliani 21
I-20148 Milano(IT)

(54) Step motor driving circuit.

(57) A driving circuit for a four phases (1, 2, 3, 4) step motor, where each stable rotor position is reached by suitably energizing the series of two of the four phases, comprises a circuit (22) which controls the current in the energized phases by comparing a current related signal with a reference signal.

Particularly, such circuit disconnects the series of two phases from the power supply and ground when the energization current reaches a predetermined upper threshold value and connect it again to the power supply and ground when the energization current, which is maintained in the phases through recycle diodes (9, 10, 11, 12), falls below a predetermined lower threshold value.

In such way the energization current within the phases is kept nearly constant and this reduces to a minimum the winding copper losses, under the same mechanical performances.

The cross configuration of the windings, with a current sensor (19) in the center of the cross, further enables to reduce to a minimum number the components of the control circuits.

./...

FIG. 1

## Step motor driving circuit

The present invention relates to a step motor driving circuit for the energization of the phase windings of such kind of motors.

As known, a step motor comprises a rotor, for instance constituted by a permanent magnet having toothed polar pieces, and by a stator having windings facing the rotor.

When such windings are sequentially excited, they interact with the rotor causing its rotation; particularly the rotor advances by an angle $\varphi$ corresponding to a step at each current switching in the windings.

Step motors have been widely used since a long time in all the cases where the passage of a rotating movable member from one to another of two angular positions, chosen among several predetermined positions, is to be controlled.

A distinction is to be made between the case of passages to immediately subsequent positions, with stopping in each of them (step advancing), and the case of fast moving, without intermediate stops, from a start position to a predetermined arrival position (fast advancing or "jump").

However in both cases, as already said, the motor rotation is obtained by means of excitation currents circulating according to a suitable sequence in the motor windings for a certain interval time: depending on the energized windings, acceleration torques, braking torques and holding torques, providing a stable state for determined rotor positions, may be generated.

In particular cases the exciting current sequence is controlled independently from the motor motion (open circuit control or "open loop") but it is usually suitable to have the current switching among the several windings controlled by the motor rotor through control signals generated, for instance, by a photoelectric disk mounted on the rotor axis and cooperating with one or more photoemitter-detector systems, so that the signal sequence depends on the rotor position sequence.

In such a way a position "feed-back" effect (closed circuit control "closed loop") is obtained.

It is clear that the duration of the winding energization pulses changes according to the rotor speed.

In case of steady rotor, in order to have it advanced by one step, a pulse is required having a length longer than the lenght of the pulse required to have it advanced by one step when the rotor is rotating with a certain speed; in case the rotor is accelerating, the lenght of the pulses required to have it advanced by subsequent step positions proportionally decreases.

A detailed description of the operation of step motors and of a control network for such motors is provided in U.S. Patent n.3.374.410.

One of the problems concerning the driving circuit of a step motor is the one to reduce to a minimum, under the same performances, the energy that such circuit requires to the power supply, in order to maximize the motor efficiency.

As known to the people skilled in the art, a first way to increase a step motor efficiency is the one to energize the stator windings according to a particular sequence.

Considering for instance a four winding step motor, which is generally the most used one, there are several energization sequences of the windings which move the rotor by the same angle.

Such sequences may appear equivalent, but actually, according to the chosen energization sequence, the motor efficiency may greatly change. The motor efficiency results high when, for instance, for each predetermined rotor position, two of the four windings are contemporaneously excited.

It is further to be noted that, if the two contemporaneously excited windings are in series, the positioning errors is corrispondence to the stable positions and minimized, such errors being due to the winding tolerances.

The selection of the couples of windings contemporaneously energized at each switching occurs according to the so called Gray code, where each couple differs from the previous are by one winding only.

For clearness purposes, by numbering four windings sequentially arranged along a circumference with reference numbers 1, 2, 3, 4, the above mentioned energization technique will involve, at the beginning, the energization, for instance, of pair 1-4, then of pairs 1-2, 2-3, 3-4, 1-4, etc.

Other methods have been used in the prior art to further reduce the energization power of a step motor.

One of such methods, already known in the prior art and described in a several patents, as for instance US patent n.4.127.801, involves the use of recycle diodes which allow to recover the energy stored in the windings when they are de-energized.

Another solution, also described in U.S. patent n.4.127.801, involves that, during the energization period, the motor windings are connected and disconnected from a continuous power supply with a frequency higher than the energization frequency of the different windings.

In such a way the windings are not connected to the power supply for the whole energization period, thus obtaining an energy saving: the current circulation within the windings, when these last ones are disconnected from the power supply, is secured by the f.c.e.m. generated, in the windings themselves, during the switching and by the already mentioned recycle diodes.

It is however to be noted that, in a step motor, a remarkable power amount is lost and cannot be recovered, due to the winding resistance, that is $RI^2$ where R is the resistance value of the energized windings and I is the effective value of the energization current.

If the effective value of the energization current is reduced, still maintaining the same mean value (it is to be remembered that the torque acting on the rotor is proportional to the mean value of the energization current), a reduction of the power lost in the windings and therefore an improvement of the step motor efficiency is obtained under the same motor performances.

On this matter, circuits which operate a direct control of the energization current in a winding are described by U.S. Pat. N.3.812.413 and French Pat. N.2.318.489.

In such circuits, when the energization current exceeds a predetermined upper threshold, the winding is disconnected from the power supply and the energization current is maintained in the windings by recycle diodes; when the current falls under a predetermined lower threshold, the winding is connected again to the power supply.

The circuits described in the above mentioned patents, whose main purpose is to obtain an high response speed of the circuits comprising the winding, could be used to control the current in the windings of a step motor in order to minimize the electrical power losses.

However a such solution, besides involving a high number of switching devices, is not well fit for a step motor where two of the phases are energized in series.

Such inconvenients are avoided by the four phase step motor driving circuit object of the present invention.

This circuit, which reduces the number of switching devices, provides the simultaneous energization of two out of four series phases of the step motor according to a suitable sequence and the direct control of the winding energization current keeping it constant in the time (apart from a little ripple) and very close to a preestablished reference value.

In addition the circuit of the present invention, offers the advan tage of changing the motor performances by changing the reference current value.

These and other features will appear more clearly from the description of a preferred embodiment of the invention and from the drawings where:

- fig. 1 shows the four phase step motor driving circuit object of the present invention;

- fig. 2 shows the imput/output characteristic of an hysteresis voltage comparator included in the energization driving circuit;

- fig. 3, 3a through 3f, show the wave-forms in particular points of the driving circuit.

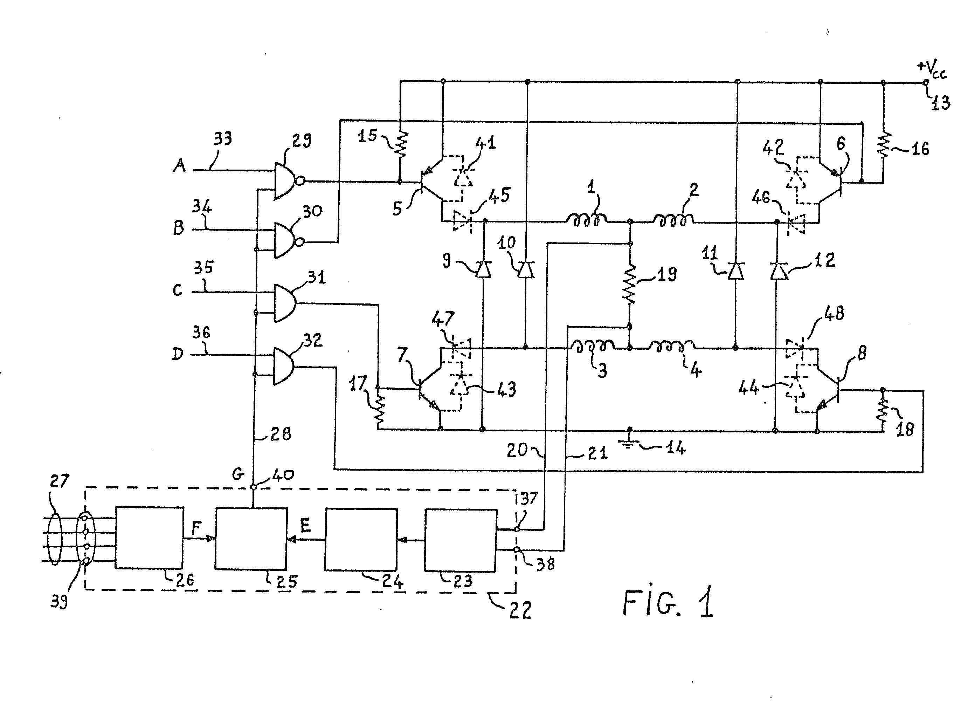

Referring to fig. 1, it shows the energization circuit for windings 1, 2, 3, 4 of a four phase step motor.

The energization sequence of the motor phases to obtain a motion of the rotor for instance in clockwise direction is the following one: energization of phases 1 and 4, energization of phases 1 and 3, energization of phases 2 and 3, energization of phases 2 and 4, energization of phases 1 and 4, and so on.

It is clear that a rotor motion in conterclockwise direction is obtained by an energization sequence of the phases reversed in respect to the previous one, that is: energization of phases 1 and 4, energization of phases 2 and 4, energization of phases 2 and 3, energization of phases 1 and 3, energization of phases 1 and 4, and so on.

It is to be remembered that the adoption of the cross (or X) arrangement of the phases allows to obtain an equal current in the energized windings, so that the positioning errors in correspondence of the stable positions are minimized, such errors being due to the spread in the electrical parameters of the winding.

In addition such circuital arrangement renders the obtained performances widely independent from the supply voltage, minimizing at the same time the number of driving transistors which are four in our case, whilst they usually are in a number from 5 to 8.

A first terminal of winding 1 is connected to the cathode of a diode 9 and to the collector of a switching transistor 5.

The anode of diode 9 is connected to ground 14 and the emitter of transistor 5 is connected to a power supply 13 of value Vcc.

The second terminal of winding 1 is connected to a first terminal of winding 2 and to a terminal of a resistor 19 having very low resistance value.

The second end of winding 2 is connected to the cathode of a diode 12 and to the collector of a switching transistor 6.

The anode of diode 12 is connected to ground 14 and the emitter of transistor 6 is connected to power supply 13.

The other terminal of resistor 19 is connected to a first terminal of winding 4 and to a second terminal of winding 3.

The first terminal of winding 3 is connected to anode of a diode 10 and to the collector of switching transistor 7.

The cathode of diode 10 is connected to power supply 13 and the emitter of transistor 7 is connected to ground 14.

The second terminal of winding 4 is connected to the anode of diode 11 and to the collector of a switching transistor 8.

The cathode of diode 11 is connected to power supply 13 and the emitter of transistor 8 is connected to ground 14.

The bases of  transistor 5, 6 are connected to the power supply  13, through two  resistors 15, 16 respectively as well as to the outputs of two input NAND gates 29, 30 respectively.

The bases  of switching transistors 7, 8 are connected to ground  14 through two resistors 17, 18 respectively and to the outputs of two input AND  gates 31, 32 respectively.

The terminals of resistor 19 are connected, through leads 20, 21, to inputs 37, 38 of an  energization current control network 22 which receives on a second input set 39, through a lead group 27,  digital signals defining in binary code  the desired reference winding current value and coming from a control unit not shown in the figure.

Energization current control network 22 provides on an output 40; connected through a lead 28 to an input of either one of the four two inputs gates 29, 30, 31, 32, a control signal which may assume one of the two logical/electrical levels 1 or 0.

Either one of gates 29, 30, 31, 32 receives to the second input, through a lead 33, 34, 35, 36 respectively, energization command pulses of phases 1, 2, 3, 4, such pulses also coming from the same control circuit (not shown in figure) which provides the digital signals on lead set 27.

Energization current control network 22 comprises a voltage linear amplifier 23, a low-pass filter 24, a digital/analog convert 26 and an hysteresis comparator 25.

The inputs of amplifier 23 coincide with inputs 37, 38 of control network 22.

The output of such amplifier is connected to the input of filter 24, whose function will be explained later on.

The output of filter 24 is connected to the signal input of comparator 25, whose reference input is connected to the output of digital/analog converter 26.

The input set of such converter coincides with input set 39 of control network 22, whose output 40 coincides with the output of comparator 25.

A detailed description of amplifier 23, of filter 24, of converter 26 and of comparator 25 is omitted because they are known in the prior art.

For instance, amplifier 23 and low-pass filter 24 may be carried out according to the circuital designs described in the 11th chapter of book "A user's handbook of integrated circuits" by E.R. Hnatek published by John Wiley & Sons, by using the operational amplifiers $\mu$.A741.

Hysteresis comparator 25, which substantially acts like a Schmitt trigger, may be carried out by means of an operational amplifier $\mu$A311 with positive feedback provided by a resistor: thus the signal input of comparator 25 coincides with the inverting input of the operational amplifier and its reference input coincides with the non-inverting input of such operational amplifier.

Digital/analog converter 26 may be obtained by means of NOT gates of the open collector type each one having the input connected to respectively one of the leads of set 27, the outputs of the NOT gates being each connected through a resistor of suitable value to the signal input of comparator 25.

The signal input is connected, through a first resistor, to a supply voltage and through a second resistor to ground.

Depending on the logical signal present on the inputs of NOT gates, a selected partitioning of the supply voltage is obtained at the signal input of comparator 25.

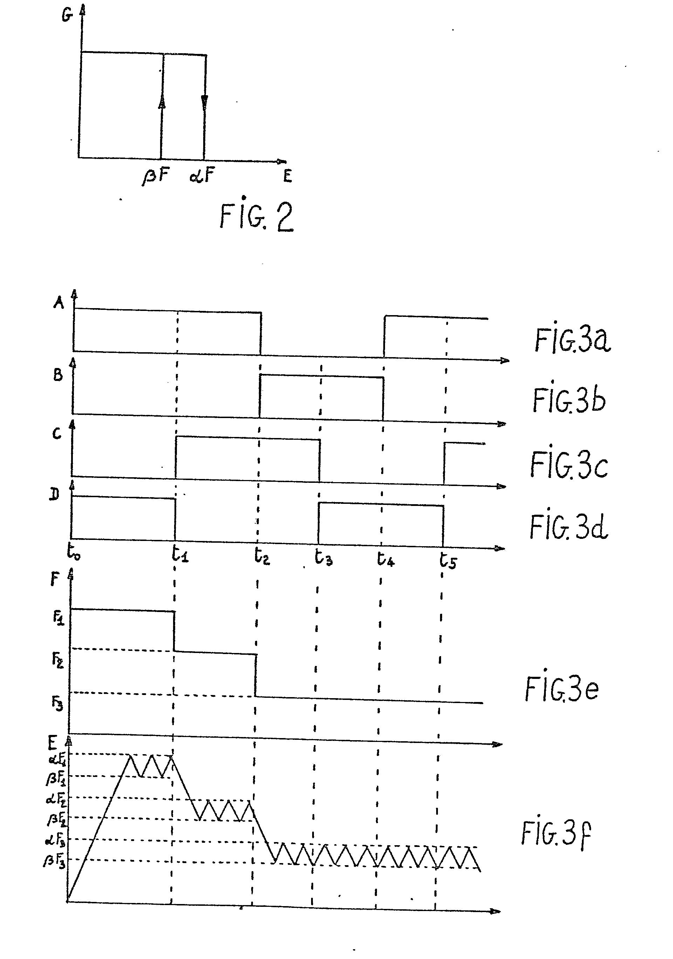

Fig. 2 shows the input/output characteristic of hysteresis comparator 25 which will result useful later on for an easier understanding of the operation of the driving circuit.

In such figure abscissa E indicates the signal voltage present on the signal input of comparator 25 and ordinate G indicates the voltage present on the output of such comparator.

It is to be noted that output G falls from electrical/logical level "1" to electrical/logical level "0" when input E reaches the upper threshold value $\alpha F$, where F is the value of the reference voltage provided to comparator 25 by the control unit through converter 26 (fig. 1) and $\alpha$ is a constant depending on the circuital features of the comparator.

Output G rises from electrical/logical level "0" to electrical/logical level "1" when input E reaches the lower threshold value $\beta F$ (with $\beta < \alpha$), where $\beta$ is a constant again depending on the circuital features of comparator 25.

Referring to the working of the driving circuit object of the present invention, the assumption is made that the rotor is initially standstill.

Figures 3a, 3b, 3c, 3d show the sequence of pulses with which the control unit provides the driving circuit, on leads 33, 34, 35, 36 respectively (fig. 1).

As already mentioned and shown in figures 3a, 3b, 3c, 3d, the initial energization intervals ($t_0 \div t_1$, $t_1 \div t_2$) have a duration greater than that one of the subsequent intervals, because the induced magnetomotive torque must initially overcome the inertia moment of the rotor providing it with a certain acceleration.

Only when the rotor reaches the rated speed the duration on the energization intervals becomes constant.

The torque provided to the rotor, and therefore its acceleration, approximately depends on the mean value of the energization current.

As the rotational speed increases, a lower torque is required to assure the motion.

Therefore the control unit sends on lead group 27 digital signals which are suitably converted by converter 26 in a continuous analogue signal, with level variable by command, which is used as reference voltage by comparator 25, and which is lower than the start-up reference voltage.

Such comparator receives on its signal input a voltage directly proportional to the energizing current, compares it with the reference voltage and supplies a control signal on its output.

It is therefore clear that the control unit can change the energization current value according to the motion conditions of the rotor and according to the performances required to the motor.

Fig. 3 shows, for instance, how the reference voltage value in output from converter 26 lowers when the rotor is moved from its standstill status.

Particularly, three references values, $F_1$, $F_2$, $F_3$, are supplied with $F_1 > F_2 > F_3$.

With reference to fig. 3a, 3b, 3c, 3d, and considering that initially the signal in output from comparator 25 is at logical level 1, the outputs of gates 29 and 32 are at logical level 0 and 1 respectively during time interval $t_0 - t_1$.

During such interval switching transistors 5 and 8 are therefore in saturation (fig. 1).

Thus an energization current flows from power supply 13 to ground 14 through transistor 5, winding 1, resistor 19, winding 4, transistor 8. Such current rises according to a time constant determined by the inductance value and the resistance value of windings 1 and 4 as well as by the resistance value of resistor 19 and it causes a voltage drop on resistor 19.

Through amplifier 23 and filter 24, such voltage drop (fig. 3f) is applied to the signal input of comparator 25 on the reference input of which a first reference voltage value $F_1$ is applied.

When the voltage drop on resistor 19, amplified and filtered, reaches the threshold $\alpha F_1$, the comparator output falls to logical level "0" inhibiting gates 29, 32 and therefore bringing transistors 5 and 8 to the cutoff region.

The energization current is maintained in windings 1 and 4 by the counter electromotive force induced in the same windings and it flows from ground 14 towards power supply 13 through diode 9, winding 1, resistor 19, winding 4, diode 11.

In this way energy recover is provided.

After a short period of time, as the energization current decreases with a time constant determined by the inductance value and resistance value of the windings as well as by the resistance value of resistor 19, the voltage drop on resistor 19 decreases too.

When such voltage, amplified and filtered, becomes equal to threshold value $\beta F_1$ (fig. 3f), the comparator output rises again to logical level "1" and enables gates 29, 32.

It is to be noted that voltage peaks may appear on resistor 19 when the current switching determined by the comparator or by the commutation of the phases occur.

In order to avoid that such voltage peaks may cause a wrong switching of comparator 25, they are filtered by filter 24.

In the time interval $t_1-t_2$ the reference voltage value changes to value $F_2$ (fig. 3c); the output of gate 29 stays at logical level "0", whilst the output of gate 31 rises from the logical level "0" to the logical level "1" and the output of gate 32 falls from "1" to "0".

The flow path of the energization current during interval $t_1 \div t_2$ becomes, being transistors 5 and 7 in saturation: power supply 13, transistor 5, winding 1, resistor 19, winding 3, transistor 7, ground 14.

When, on the contrary, owing to the switching caused by the energization current control circuit 22, transistors 5 and 7 are cutoff, the energization current is maintained in windings 1, 3 through the flow path determined by: ground 14, diode 9, winding 1, resistor 19, winding 3, diode 10, power supply 13.

It is clear that the switching determined by comparator 25 will occur within interval $t_1 \div t_2$ at a current level determined by thresholds $\alpha F_2$ and $\beta F_2$.

The analysis of what occurs in the intervals which follow is completely identical to the previous one, except that the reference voltage value further lowers.

It is to be noted that the energization current, except for the initial energization intervals, is maintained nearly constant thanks to the driving circuit object of the present invention apart from ripple factor due to the comparator hysteresis.

In such way the mean value of the energization current, from which the dynamical performances of the step motor are dependent, substantially coincides with its effective value, which resistive losses depend on .

An optimization in the energization is therefore obtained.

It is to be noted that, in case protection diodes (outlined in fig. 1 and evidenced by reference numbers 41, 42, 43, 44 respectively) are used for switching transistors 5, 6, 7, 8, the driving circuit efficiency decreases because the ratio between the time during which the windings are connected to the power supply and the time during which they are disconnected from it is increased.

By way of explaination the case in which windings 1 and 4 are contemporaneously energized is examined and the action carried out by protection diode 43 is considered.

Owing to the magnetic coupling between winding 4 and winding 3, an induced current will flow from ground to winding 3 through diode 43 when current changes in winding 4.

Such current already established may oppose to the energization current of phases 1 and 3 when they begin to be energized, causing an increase of the current rising time.

To avoid such inconvenient it suffices to insert, between phase 3 and the corresponding switching transistor 7, a diode 47 (outlined in fig. 1 and having its cathode connected to the collector of transistor 7) which diode prevents the generation of induced currents.

The same action is carried out by diode 48 (outlined in fig. 1) whose cathode is connected to the collector of switching transistor 8 and whose anode is connected to terminal of winding 4.

As concerns phases 1 and 2 the analysis is similar to the previous one with the only difference that the criticism due to the induced currents occurs in correspondence with the commutations determined by the energization current control circuit 22.

In fact, assumption is made that phases 1 and 4 are excited.

At the time when the energization current reaches the imposed threshold value and therefore phases 1 and 4 are disconnected from power supply 13, an induced current flows towards the power supply through winding 2 and diode 42.

Such current is therefore drained from the energizing one, which, for this reason, reaches its lower threshold value shorter than expected.

To avoid such inconvenient, a diode 46 (outlined in fig. 1), having its anode connected to the collector of transistor 6, is inserted between winding 2 and transistor 6.

Likewise a diode 45 (outlined in fig. 1) having its anode connected to the collector of transistor 5, is inserted between winding 1 and such transistor 5.

From an analitical study it results that, by using a driving circuit with energization current control of the kind described in the present invention, an energy saving of about 2o ÷ 30% is obtained as compared

- 14 -

to the utilization of conventional driving circuits.

It is clear that several changes may be made to the described driving circuit without departing from the scope of the invention.

## Claims

1. Step motor driving circuit for a four-phases step motor where each stable rotor position is reached by suitable energization of the series of two of said four phases, characterized by that it compri ses:
   - four switching devices, each one coupled to one of said four pha ses, controlled through logical gates by first command pulses supplied by a control unit which controls with suitable sequence the contemporaneous closing of two of said switching devices;
   - an energization current sensor, always in series with any energi zed pair of said phases, providing at its output a signal propor tional to the energization current in said phase pairs;
   - a control circuit of said energization current which compares the output of said sensor with a reference signal and supplies with second command signals said switching devices through said logical gates, said control current together with said logical gates providing the opening of said switching devices when said energization current overcomes a predetermined upper threshold value and the further closing of said switching devices when said current falls below a predetermined lower threshold value.

2. Step motor driving circuit as claimed in claim 1 further characterized by that it comprises recycle diodes which enable to maintain said energization current within the winding pair selected by said control unit, during the time interval of said switching devices, said time interval being determined by said control circuit.

3. Step motor driving circuit as claimed in claim 1 where said current sensor consists in a resistor with low resistance value.

FIG. 1

0048405

FIG. 2

FIG.3a

FIG.3b

FIG.3c

FIG.3d

FIG.3e

FIG.3f